# EUROPEAN PATENT APPLICATION

(11) **EP 1 396 797 A1**
(43) Date of publication of application: **10.03.2004**
(21) Application number: 02019777.8
(22) Date of filing: 04.09.2002
(51) Int. Cl.: G06F 17/30

(54) **Database query set-up tool and method for setting up a query**

(71) Applicant: Sony International (Europe) GmbH, 10785 Berlin (DE)
(72) Inventor: Torge, Sunna, Sony International (Europe) GmbH, 70327 Stuttgart (DE); Hying, Christian, Sony International (Europe) GmbH, 70327 Stuttgart (DE)
(74) Representative: Müller - Hoffmann & Partner

(57) **Abstract**

A database query set-up unit comprising a contribution stack and means for deriving a current information state from said contribution stack is described. Any search criteria provided by any user or by the system itself is pushed onto said contribution stack in the order of occurrence. The current information state, which is used for actually accessing the database, is formed from a subset of the set of search criteria contained in said contribution stack. In order to relax the search constraints, it is possible to suppress one or more of the search criteria contained in said contribution stack when forming the current information state. By implementing a contribution stack, it is possible to keep track of the order of occurrence of the various user inputs and system contributions, and to use this information for relaxing the search constraints.

## Description

The invention is related to a database query set-up unit for combining a set of search criteria in order to set up a database query, and to a method for setting up database queries by combining a set of search criteria.

In a dialogue system for database access, the user is mainly specifying the search criteria for a database request. This does not only include specification of the search criteria but it may also involve change or relaxation of said search criteria. The information of what has been achieved in the dialogue so far is called the information state, and in this particular setting, the information state comprises the search criteria. In order to obtain adequate recognition rates in speech recognition and language understanding and integrate newly added information into the system, the system needs to restrict and structure the information given by the user. For this purpose, a hierarchy of data is necessary, which reflects the dependencies which hold between the units of the given information.

Most state of the art dialogue systems retrieve such a hierarchy from the structure of the domain. Ill-structured tasks [Bernsen, N. O. and Dybkjaer, L.: From single word to natural dialogue. Invited book chapter in Zelkowitz, M. V. (Ed.): Advances in Computers, Vol. 52. London: Academic Press 2000, 267-327, section 3.9.2] explore a domain that does not provide a naturally given structure; in case dialogue systems have to cope with such an ill-structured task, current state of the art systems either impose an unnatural hierarchy onto the domain and assist the user finding his way through this hierarchy [TrindiKit: Staffan Larsson, Robin Cooper, Stina Ericsson (2001): menu2dialog. In Jokinen (Ed.): Knowledge and Reasoning in Practical Dialogue Systems, Workshop Program, IJCAI-2001] or they take an incremental approach [Embassi: Bernd Ludwig, Günther Görz, Heinrich Niemann, An Inference-based Approach to the Interpretation of Discourse, Special Issue of the Journal of Language and Computation, Volume 1, Number 2, 2000, pp. 241-258].

The incremental approach classifies any new information that is added to the current information state as dependent on the current (unaugmented) information state; it does not postulate an unnatural hierarchy. Thus, if only a part of the information state is overwritten in a further step, the latest information is deleted, since it depends on the entire information state and so it also depends on that part. This behaviour is implemented by keeping a history of information states; if a previous information state is restored, all information that has been added subsequently is lost.

It is an object of the invention to combine a set of search criteria for performing a database query in a more flexible way, in order to allow for a relaxation of said search criteria.

The object of the invention is solved by a database query set-up unit for combining a set of search criteria in order to set up a database query according to claim 1, and by a method for setting up database queries by combining a set of search criteria according to claim 15. Preferred embodiments thereof are respectively defined in the following dependent sub-claims. A computer program product according to the present invention is defined in claim 28.

In the database query set-up unit according to the invention, a set of search criteria is combined in order to set up a database query. The database query set-up unit comprises a contribution stack, in which search criteria provided by at least one user or by the system itself are stored in the order of occurrence. Each new search criterion provided by said at least one user is pushed onto said contribution stack. Furthermore, the database query set-up unit comprises means for deriving a current information state from said contribution stack, whereby said current information state is formed from a subset of the set of search criteria contained in said contribution stack. Said current information state is used for accessing a database.

In prior art solutions, the various search criteria provided by a user are immediately combined to form an information state, and the database is accessed according to said information state. When said information state is formed, the order in which the user has input the search criteria is lost. The hierarchy defined by the sequence of user inputs is no longer available. In order to maintain the information about the order in which said search criteria have been provided, a contribution stack is used for storing said search criteria. Whenever an attribute, a keyword or another kind of search constraint is entered by the user, said search criterion is pushed onto the contribution stack. After a set of search criteria has been entered, the oldest search criterion can be found at the bottom of the contribution stack. Recently entered search constraints, which have recently been pushed onto the contribution stack, can be found on top of the stack. Thus, the order of the entries within the stack corresponds to the order of occurrence of said search criteria. This holds true even in case said search criteria are not only provided by one single user, but by several users, or partly by said users and partly by the system itself. The invention allows the user to freely provide input without being restricted by preceding specifications.

Starting from the entries within the contribution stack, a current information state is derived. Said current information state is then used for actually accessing the database. Of course, it is possible to utilize the whole set of entries within the contribution stack for forming the current information state. By combining all the search criteria that have been entered so far, the resulting query might be to narrow, though, and the number of hits within the database might be very small or even zero. In this case, the search result is not very valuable for the user.

In such a situation, it is desirable to relax the search criteria in order to increase the number of hits. For obtaining valuable search results, it is very important to use powerful relaxation strategies that relax said search criteria in a way that the query still reflects what the user intends to search for. For relaxing the search constraints, it is necessary to leave out one or more of the entries in the contribution stack when forming the current information state. Broadening the scope of a query therefore implies that a subset of the set of search criteria contained in the contribution stack is chosen. By using the contribution stack according to the invention, it is possible to define relaxation strategies that consider the order in which said search criteria have been provided. For example, the relaxation strategy could be to ignore the oldest search criterion at the very bottom of the contribution stack when deriving the current information state. In prior art solutions, it has not been possible to keep track of the order of occurrence of the search criteria, and therefore, it has not been possible to relax the search in dependence of said order.

The query that has been set up by relaxing the initial set of search constraints might not be successful either. In case the initial entries in the contribution stack are still available and have not been erased yet, it is possible to form a second current information state from the initial set of search criteria, whereby at this time, a different relaxation strategy is used. When this second current information state is used for accessing the database, this second query might yield an acceptable result.

Preferably, the order in which said search criteria are provided by said at least one user or by the system determines a hierarchy of dependencies between said search criteria. Predefined hierarchies of dependencies between different search criteria and search attributes are not used in the solution according to the invention. Instead, the hierarchy of dependencies is dynamically defined by the user input. The order in which the user enters the various search criteria defines the hierarchy of said search criteria. The search criterion that is provided first has the highest level in the hierarchy. All search criteria that are input afterwards depend on said search criterion. Thus, the dependencies between said search criteria are defined by the order of occurrence.

According to a preferred embodiment of the invention, each time a new search criterion is provided, it is checked whether said new search criterion refers to an attribute that has already been specified by an earlier search criterion stored in said contribution stack. For a certain query, each search attribute only has to be specified once. When the user provides two different specifications for a certain search attribute, then these two specifications contradict each other. The search criteria are not coherent in this case. For example, when performing a query for German literature, it does not make sense to specify the search attribute "author" more than once. When a user specifies a certain search attribute for the second time, the database query set-up unit's interpretation is that the user wants to correct an input that has been made earlier. For this reason it has to be checked each time a new search criterion is provided whether said new search criterion refers to an attribute that has already been specified earlier.

Preferably, in case said new search criterion refers to an attribute that has already been specified by an earlier search criterion stored in said contribution stack, said earlier search criterion is erased from said contribution stack, and said new search criterion is pushed onto said contribution stack. This is the first method for overwriting a search attribute that has been specified earlier. In order to set up a coherent query, the earlier search criterion, which is stored at some location within the contribution stack, is erased. Said new search criterion is pushed onto the contribution stack. All the search criteria stored at intermediate positions between said earlier search criterion and said new search criterion are maintained. Therefore, in the first method of overwriting, these intermediate entries are not lost. Another advantage is that the new search criterion is written to a location within the contribution stack that corresponds to the order of occurrence of said new search criterion.

Alternatively, in case said new search criterion refers to an attribute that has already been specified by an earlier search criterion stored in said contribution stack, said earlier search criterion and all search criteria that have been pushed onto the contribution stack afterwards are popped from said contribution stack, and said new search criterion is pushed onto said contribution stack. This is the second method for overwriting a search criterion that has been provided earlier. Again, the earlier search criterion is erased from the contribution stack, and the new search criterion is pushed onto the contribution stack. According to this second method, the intermediate entries between the earlier search criterion and the new search criterion are erased as well, because they depend on the earlier search criterion which is not valid anymore. The search criterion specified by the user is written exactly to the stack position where said earlier search criterion has been stored. Then, the following contributions given either by the user or the system fill up the consecutive stack positions. According to this approach, the intermediate stack entries are erased.

Preferably, the database query set-up unit comprises means for relaxing the search constraints of a database query which suppress at least one of said search criteria contained in said contribution stack when said current information state is derived. In case a query comprises too many search criteria, a very limited search result is obtained. In this case, it is advantageous to suppress one or more of said search criteria when forming said current information state. This does not necessarily imply that the suppressed search criteria are also erased from the contribution stack. After the search constraints have been relaxed, the system presents a wider range of the respective database to the user.

Preferably, said means for relaxing the search constraints of a database query select the search criteria to be suppressed according to the order of occurrence, and/or according to user profiles, and/or according to context information. By considering some or all of these aspects, it is possible to relax the search constraints in a way that the thus obtained search result corresponds closely to the needs and expectations of the user. By considering the order of occurrence of said search criteria, a user's profile, and context information that has been obtained so far, it is possible to set up a relaxation strategy.

Preferably, at least the most recent search criterion stored in said contribution stack is suppressed when said current information state is derived. Here, the search criterion to be suppressed is selected according to the order of occurrence: the search criterion that has most recently been pushed onto the contribution stack is suppressed. The last input of the user is considered the least relevant input here.

Alternatively or additionally, at least the oldest search criterion stored in said contribution stack is suppressed when said current information state is derived. Again, the relaxation is performed according to the order of occurrence of the search criteria. Though the oldest search criterion corresponds to the uppermost level of the dependency hierarchy, it is assumed that the user has made this input a long time ago and that he might not even remember said oldest search criterion anymore. Due to this fading memory of the user, contributions that have been provided recently are considered more relevant.

According to a preferred embodiment of the invention, search criteria that are suppressed when said current information state is derived are erased from said contribution stack. According to this embodiment, the query that has been performed based on the current information state corresponds exactly to the state of the contribution stack. Both in the current information state and in the contribution stack selected search criteria have been taken away. The user can now specify new search criteria which are pushed onto the contribution stack.

According to an alternative preferred embodiment of the invention, search criteria that are suppressed when said current information state is derived are only erased from said contribution stack when it turns out that the query yields a valuable result. As long as it is not yet clear whether the relaxation strategy leads to a sensible result, all the search criteria are maintained within said contribution stack. If the relaxation strategy that has been chosen is not successful, it is still possible to try another relaxation strategy. In this second relaxation strategy, the search criteria that have been suppressed during the first approach might become relevant again. Therefore, it is advantageous not to erase these contributions too early.

According to a third preferred embodiment of the invention, search criteria that are suppressed when said current information state is derived are maintained within said contribution stack. Here, all the input provided by the user is always available in chronological order, and no information is lost. From said user input, any desired current information state can be derived at any time.

Preferably, said search criteria are obtained by means of an interactive system based on an artificial language, preferably based on a database query language. A simple example for such a database query language is the language which only consists of attribute value pairs corresponding to the database.

Alternatively, said search criteria are obtained from said at least one user by means of a natural language dialogue system. The user specifies the search criteria for the query as a natural language input. Here, the user has a lot of freedom how to specify his query. Especially for spoken language systems that employ some kind of speech recognition, natural language dialogue systems are the preferred method for obtaining user input.

The inventive method is a method for setting up database queries by combining a set of search criteria. In a first step, search criteria provided by at least one user or by the system itself are pushed onto a contribution stack in the order of occurrence. In the next step, a current information state is derived from said contribution stack, whereby said current information state is formed from a subset of the set of search criteria contained in said contribution stack. Next, a database query corresponding to said current information state is set up.

Further features and advantages of preferred embodiments according to the present invention will be explained below in conjunction with the accompanying drawings, in which
- **Fig. 1**: shows a contribution stack according to the invention;
- **Fig. 2**: shows a contribution stack containing four search criteria;
- **Fig. 3A**: shows the contribution stack after the entry 4 has been overwritten according to a first method for overwriting an entry;
- **Fig. 3B**: shows the contribution stack after the entry 4 has been overwritten according to a second method for overwriting an entry;
- **Fig. 4**: shows how the entries contained in the contribution stack are used for deriving a current information state;
- **Fig. 5**: depicts how the search constraints can be relaxed by suppressing the most recent entry;
- **Fig. 6A**: shows how the search constraints can be relaxed by suppressing the oldest entry;
- **Fig. 6B**: shows the state of the contribution stack when the suppressed entry is maintained; and
- **Fig. 6C**: shows the state of the contribution stack when the suppressed entry is erased from the contribution stack.

In the following, the invention will be explained by means of several examples. Let us assume that a music title database is accessed via a spoken dialogue system. For each item in said database, a set of attributes is provided. In our example, let us assume that there are attributes indicating the genre, the artist, the time period, the song type and the title name. For each of the items within the music title database, each of said attributes has been specified and is stored within the database.

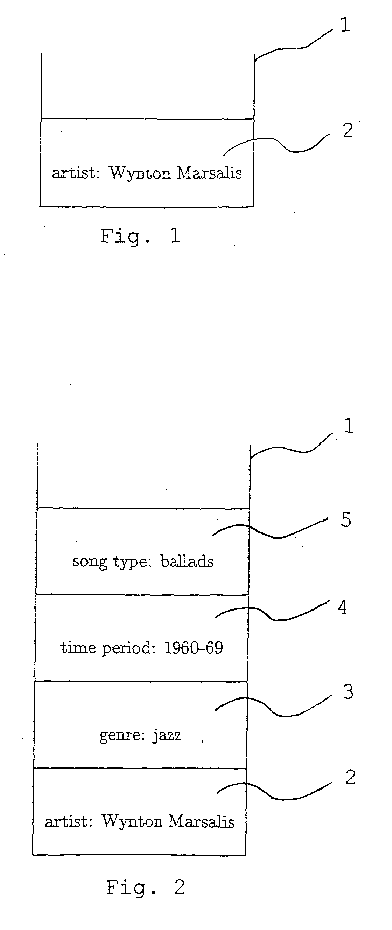

In Fig. 1, a contribution stack 1 according to the invention is shown. Now, the user starts setting up his query. There is no predefined hierarchy of the different attributes (genre, artist, time period, song type, title name), and therefore, the user can specify any attribute he wants. In our case, the user first specifies that he or she is interested in music from Wynton Marsalis. The search criterion "artist: Wynton Marsalis" is pushed onto the contribution stack, as it is shown in Fig. 1. The bottom entry 2 of the contribution stack 1 therefore contains the search criterion "artist: Wynton Marsalis". In order to continue setting up the query, the user now specifies that he is interested in the genre Jazz. Therefore, the search criterion "genre: Jazz" is pushed as a further entry 3 onto the contribution stack 1. The hierarchy between the different search criteria is dynamically defined during the course of user inputs. The hierarchy of dependencies between the various search criteria depends on the order in which these search criteria are provided by the user. For this reason, the search criterion "genre: Jazz" depends on the search criterion "artist: Wynton Marsalis".

In our example, the next input provided by the user is "time period: 1960 - 69". The attribute "time period" has not been specified by any search criterion provided earlier, and therefore, there are no conflicts. The new search criterion "time period: 1960 - 69" is therefore pushed, as an entry 4, onto the contribution stack 1. Next, the user specifies that he is interested in the song type "ballads". The system checks whether the attribute "song type" has already been provided. This is not the case, and therefore, the search criterion "song type: ballads" is pushed, as an entry 5, onto the contribution stack 1. The contribution stack 1, together with the entries 2, 3, 4, 5, is depicted in Fig. 2.

The user continues setting up the query by providing "time period: 1970 - 79" as a next search criterion. The database query set-up unit checks whether the attribute "time period" has already been specified earlier, and detects that in entry 4, "1960 - 69" has been specified as the relevant time period. The two user inputs for the attribute "time period" contradict, and the query is not coherent anymore. In order to resolve the contradiction, the system assumes that the most recent input provided by the user represents what the user is interested in. Therefore, it is assumed that the user is no longer interested in music from the time period 1960 - 69, and that he is instead interested in music from the time period 1970 - 79. Therefore, the entry 4 containing the search criterion "time period: 1960 - 69" has to be overwritten.

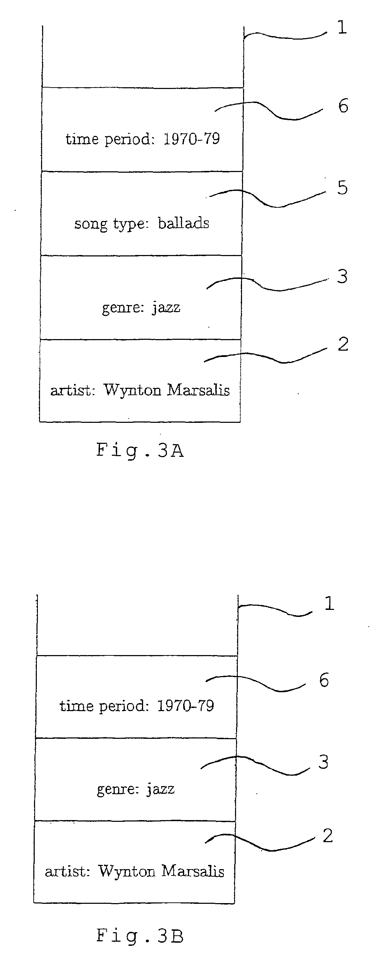

In Fig. 3A, a first method for overwriting a former entry is indicated. According to this method, the entry 4, in which the attribute "time period" has been set to "1960 - 69", is erased from the contribution stack 1. The new search criterion "time period: 1970 - 79" is pushed, as an entry 6, onto the contribution stack 1. Between the former entry 4 and the new entry 6, there exists an intermediate entry 5 "song type: ballads". Though this entry 5 depends on the entry 4, which has been erased from the contribution stack 1, the entry 5 is maintained in the contribution stack 1. This can be seen in Fig. 3A. Maintaining said intermediate entry 5 has the advantage that the user doesn't have to specify the attribute "song type" again. It can be also seen from Fig. 3A that the order of the entries 2, 3, 5, 6 in the contribution stack 1 still represents the chronological order in which the user has specified the various search criteria.

According to a second method for overwriting a former entry, all the intermediate entries between said former entry 4 and a new entry specifying the same attribute "time period" are erased as well. The reason for doing this is that said intermediate entries, for example the entry 5 "song type: ballads", depend on the entry 4 "time period: 1960 - 69", which has to be erased. According to the second method of overwriting a former entry, all the intermediate entries are popped from the stack, and then, the entry that is to be overwritten is popped from the contribution stack. This means that both the entry 5 "song type: ballads" and the entry 4 "time period: 1960 - 69" have to be popped from the contribution stack 1 before the new entry 6, "time period: 1970 - 79" can be pushed onto the contribution stack 1. The state of the contribution stack after said second method for overwriting a former entry has been performed is shown in Fig. 3B. Both with said first method and with said second method for overwriting a former entry it is possible to obtain a coherent contribution stack 1. As can be seen from Fig. 3B, the chronological order of the entries 2, 3, 6 is still preserved.

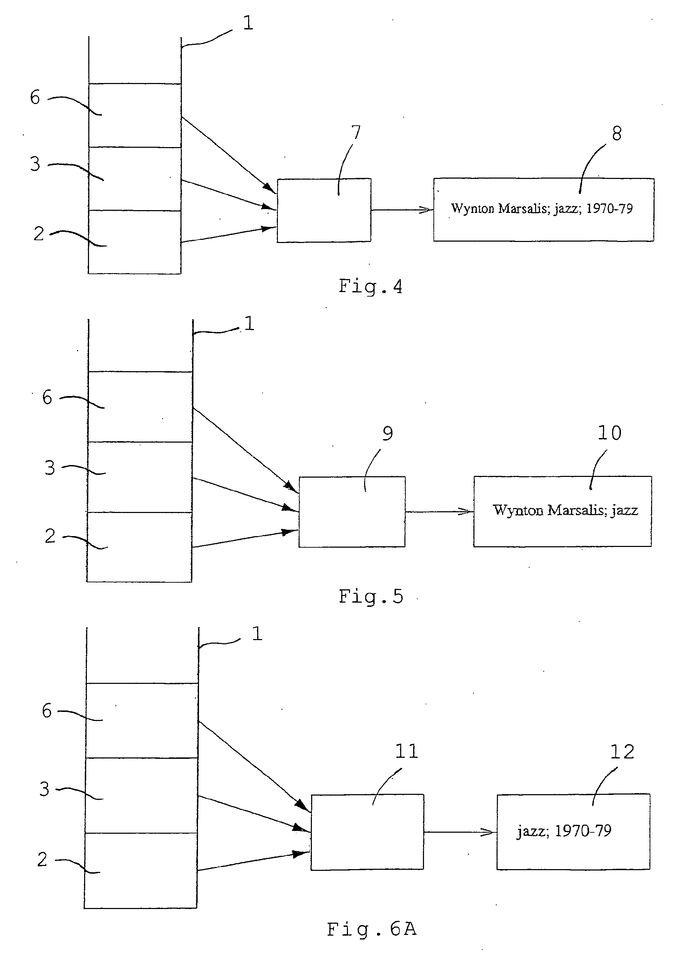

In Fig. 4, it is shown how the entries 2, 3, 6 contained in the contribution stack 1 are used for deriving a current information state. The entries 2, 3, 6 are forwarded to means 7 for providing a current information state. The search criteria "artist: Wynton Marsalis", "genre: Jazz" and "time period: 1970 - 79" are combined, by said means 7, into a current information state 8. Said current information state 8 in then used for actually performing the query within the music title database.

Let us assume that the query with the search criteria "Wynton Marsalis, jazz, 1970-79" does not deliver a sufficient number of hits. In this case, the scope of the query has to be broadened by relaxing the search constraints that have been provided so far. In order to relax the search constraints, one or more of the search criteria "artist: Wynton Marsalis", "genre: jazz" and "time period: 1970-79" have to be suppressed.

An example of how the search constraints can be relaxed is shown in Fig. 5. Initially, the entries 2, 3, 6 ("artist: Wynton Marsalis", "genre: jazz", "time period: 1970-79") are contained in the contribution stack 1. These entries 2, 3, 6 are forwarded to means 9 for deriving a current information state, which comprise means for relaxing the search constraints in case a previous query has not yielded acceptable results. In the case shown in Fig. 5, the entry that has been pushed onto the contribution stack most recently is suppressed. Thus, the entry 6 specifying the search criterion "time period: 1970-79" is suppressed, and the current information state 10 generated by said means 9 comprises the search criteria "Wynton Marsalis, jazz". With this relaxed subset of search criteria, a new query is carried out, which might yield a better result.

Suppressing an entry when generating a current information state does not necessarily imply that the respective entry, in the case of Fig. 5 the entry 6, has to be erased from the contribution stack. Erasing the entry 6, "time period: 1970-79" can be postponed until it has turned out that the query has been successful, because in case the query has not been successful, the entry 6 might still be required for forming a different current information state. Of course, it is also possible to erase the entry 6 immediately, in order to establish a correspondence between the query and the underlying contribution stack. A third method is to maintain the entry 6 within the contribution stack 1. In this case, the contribution stack 1 always contains all the user inputs in chronological order and can repeatedly be accessed for generating different current information states.

In the example given in Fig. 6A, a different strategy for relaxing the search criteria is used. Again, the contribution stack 1 contains the three entries 2, 3, 6, which comprise the search criteria "artist: Wynton Marsalis", "genre: jazz", and "time period: 1970-79". Said entries 2, 3, 6 are forwarded to means 11 for deriving a current information state, which comprise means for relaxing the search constraints. In the example shown in Fig. 6A, a different relaxation strategy is used, because now, the oldest entry within the stack is ignored. The entry 2, "artist: Wynton Marsalis" is suppressed, and the current information state 12 comprises the search criteria "jazz, 1970-79" contained in the entries 3 and 6.

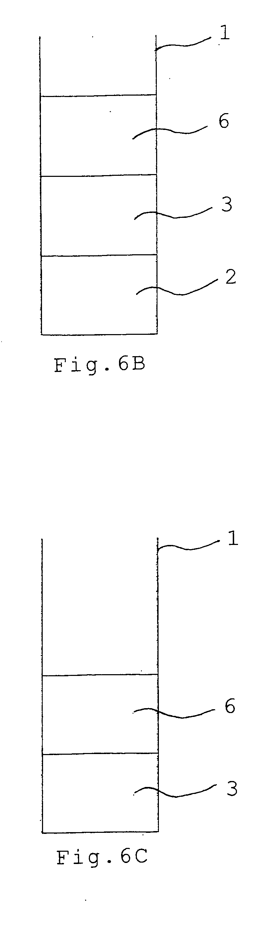

In Fig. 6B, the state of the contribution stack 1 is shown for the case that the entry 2 that has been suppressed is maintained within the contribution stack 1. Fig. 6C shows the state of the contribution stack for the case that the suppressed entry 2 is erased from the contribution stack 1.

Generally, any relaxation strategy can be used for broadening the scope of the query defined by the search criteria within the contribution stack. One could suppress any entry, as for instance the most recent entry (cf. Fig. 5) or the oldest entry (cf. Fig. 6A). In both cases, the entry that is to be suppressed is selected according to the order in which said entries have been provided by the user. These strategies can only be applied when said order is known. When a contribution stack is employed, the order of occurrence of the search criteria is known.

When selecting the entries that are suppressed it is also possible to consider a user's profile and other kinds of context information. The aim of the respective relaxation strategy is that though the query as initially specified by the user has not been successful, the user is provided with the results of a query that gets close to his or her intentions.

## Claims

1. Database query set-up unit for combining a set of search criteria in order to set up a database query, **characterized by**
a contribution stack (1) for storing search criteria provided by at least one user or by the system itself in the order of occurrence, whereby each new search criterion provided by said at least one user or by the system is pushed onto said contribution stack (1), and
means (7, 9, 11) for deriving a current information state (8, 10, 12) from said contribution stack (1), whereby said current information state is formed from a subset of the set of search criteria contained in said contribution stack (1), and whereby said current information state (8, 10, 12) is used for accessing a database.

2. Database query set-up unit according to claim 1, **characterized in that** the order in which said search criteria are provided by said at least one user or by the system determines a hierarchy of dependencies between said search criteria.

3. Database query set-up unit according to claim 1 or 2, **characterized in that** each time a new search criterion is provided, it is checked whether said new search criterion refers to an attribute that has already been specified by an earlier search criterion stored in said contribution stack.

4. Database query set-up unit according to claim 3, **characterized in that**, in case said new search criterion refers to an attribute that has already been specified by an earlier search criterion stored in said contribution stack, said earlier search criterion is erased from said contribution stack, and said new search criterion is pushed onto said contribution stack.

5. Database query set-up unit according to claim 3, **characterized in that**, in case said new search criterion refers to an attribute that has already been specified by an earlier search criterion stored in said contribution stack, said earlier search criterion and all search criteria that have been pushed onto the contribution stack afterwards are popped from said contribution stack, and said new search criterion is pushed onto said contribution stack.

6. Database query set-up unit according to anyone of the preceding claims, **characterized by** means for relaxing the search constraints of a database query which suppress at least one of said set of search criteria contained in said contribution stack when said current information state is derived.

7. Database query set-up unit according to claim 6, **characterized in that** said means for relaxing the search constraints of a database query select the search criteria to be suppressed according to the order of occurrence, and/or according to user profiles, and/or according to context information.

8. Database query set-up unit according to claim 6 or 7, **characterized in that** at least the most recent search criterion stored in said contribution stack is suppressed when said current information state is derived.

9. Database query set-up unit according to claim 6 or 7, **characterized in that** at least the oldest search criterion stored in said contribution stack is suppressed when said current information state is derived.

10. Database query set-up unit according to anyone of claims 6 to 9, **characterized in that** search criteria that are suppressed when said current information state is derived are erased from said contribution stack.

11. Database query set-up unit according to anyone of claims 6 to 9, **characterized in that** search criteria that are suppressed when said current information state is derived are only erased from said contribution stack when it turns out that the query yields a acceptable result.

12. Database query set-up unit according to anyone of claims 6 to 9, **characterized in that** search criteria that are suppressed when said current information state is derived are maintained within said contribution stack.

13. Database query set-up unit according to anyone of the preceding claims, **characterized in that** said search criteria are obtained by means of an interactive system based on an artificial language, preferably based on a database query language.

14. Database query set-up unit according to anyone of claims 1 to 12, **characterized in that** said search criteria are obtained from said at least one user by means of a natural language dialogue system.

15. Method for setting up database queries by combining a set of search criteria, **characterized by** the following steps:
- pushing search criteria provided by at least one user or by the system itself onto a contribution stack (1) in the order of occurrence,
- deriving a current information state (8, 10, 12) from said contribution stack (1), whereby said current information state (8, 10, 12) is formed from a subset of the set of search criteria contained in said contribution stack (1),
- setting up a database query corresponding to said current information state (8, 10, 12).

16. Method according to claim 15, **characterized in that** the order in which said search criteria are provided by said at least one user or by the system determines a hierarchy of dependencies between said search criteria.

17. Method according to claim 15 or claim 16, further **characterized by**
each time a new search criterion is provided, checking whether said new search criterion refers to an attribute that has already been specified by an earlier search criterion stored in said contribution stack.

18. Method according to claim 17, **characterized by**
erasing said earlier search criterion from said contribution stack, and pushing said new search criterion onto said contribution stack in case said new search criterion refers to an attribute that has already been specified by an earlier search criterion stored in said contribution stack.

19. Method according to claim 17, **characterized by**
popping said earlier search criterion and all search criteria that have been pushed onto the contribution stack afterwards from said contribution stack, and pushing said new search criterion onto said contribution stack in case said new search criterion refers to an attribute that has already been specified by an earlier search criterion stored in said contribution stack.

20. Method according to any of claims 15 to 19, **characterized by** a step of
relaxing the search constraints of a database query by suppressing at least one of said set of search criteria contained in said contribution stack when said current information state is derived.

21. Method according to claim 20, **characterized by** a step of
selecting the search criteria to be suppressed according to the order of occurrence, and/or according to context information, and/or according to user profiles.

22. Method according to claim 20 or 21, **characterized by** a step of
suppressing at least the most recent search criterion stored in said contribution stack when said current information state is derived.

23. Method according to claim 20 or 21, **characterized by** a step of
suppressing at least the oldest search criterion stored in said contribution stack when said current information state is derived.

24. Method according to anyone of claims 20 to 23, **characterized by** a step of
erasing those search criteria from said contribution stack that have been suppressed when said current information state is derived.

25. Method according to anyone of claims 20 to 23, **characterized by** a step of
maintaining those search criteria within said contribution stack that have been suppressed when said current information state is derived.

26. Method according to anyone of claims 15 to 25, **characterized by** a step of
obtaining said search criteria by means of an interactive system based on an artificial language, preferably based on a database query language.

27. Method according to anyone of claims 15 to 25, **characterized by** a step of
obtaining said search criteria from said at least one user by means of a natural language dialogue system.

28. Computer program product, comprising computer program means adapted to embody the features of the database query set-up unit as defined in anyone of claims 1 to 14 or to perform the method steps as defined in anyone of claims 15 to 27 when said computer program product is executed on a computer, digital signal processor, or the like.
